# EUROPEAN PATENT APPLICATION

(11) **EP 4 667 789 A1**
(43) Date of publication of application: **24.12.2025**
(21) Application number: 24756571.6
(22) Date of filing: 19.01.2024
(51) Int. Cl.: F16J 15/3212, F16J 15/3204, F16J 15/3252

(54) **SEALING DEVICE**

(30) Priority: 15.02.2023 JP 2023021874
(71) Applicant: NOK Corporation, Minato-ku, Tokyo 105-8585 (JP)
(72) Inventor: TANAKA, Kazuki, Fukushima-shi, Fukushima 960-1193 (JP)
(74) Representative: TBK
(86) International application number: PCT/JP2024/001511
(87) International publication number: WO 2024/171720

(57) **Abstract**

Provided is a sealing device that can suppress the disengagement of a garter spring from an annular groove. The sealing device includes a suppression part configured to suppress protrusion of a garter spring 300 out of an annular groove 221 in a case where the garter spring 300 is deformed when the sealing device 10 is attached to a shaft 20. The suppression part has a plurality of protrusion parts 222 provided at intervals in a circumferential direction in an outer peripheral surface of a seal lip 220 on a lip leading end side, the protrusion parts protruding toward a root side of the seal lip 220. The suppression part also has a support surface supporting the garter spring 300 along an outer peripheral surface thereof, the support surface being provided in a surface of the protrusion parts 222 on the root side when viewed in a cross section obtained by cutting the seal lip 220 along a plane that includes a central axis of the shaft 20.

## Description

### [Technical Field]

The present invention relates to a sealing device.

### [Background Art]

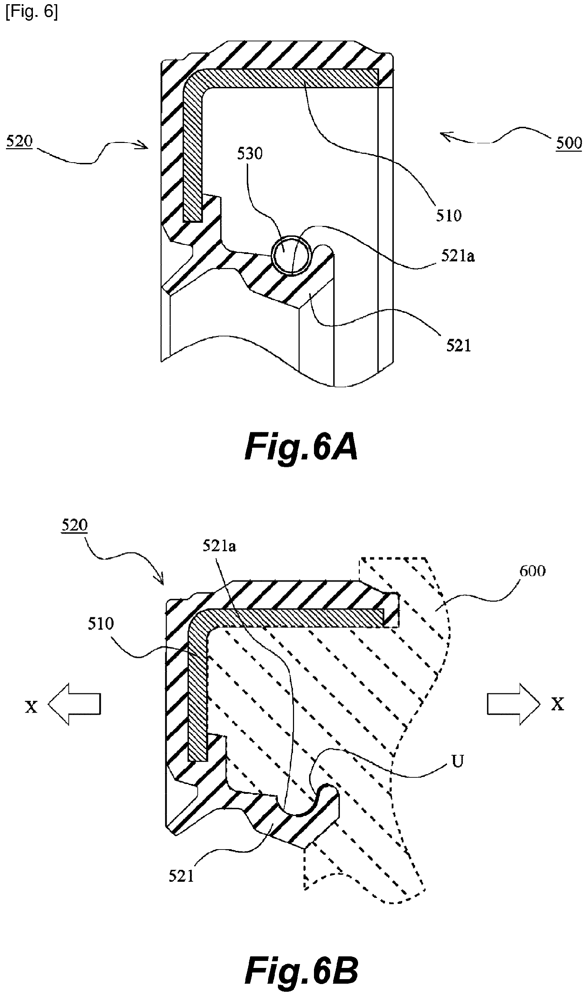

Conventionally, in sealing devices (oil seals) for rotation, a garter spring is mounted on an outer peripheral surface of a seal lip to maintain the state of contact between an inner peripheral tip of the seal lip and a shaft. With reference to Fig. 6, a sealing device according to a related art will be described. Figs. 6A and 6B are explanatory diagrams of the sealing device according to the related art, where Fig. 6A is a schematic cross-sectional view of the sealing device, and Fig. 6B is an explanatory diagram of the sealing device during manufacturing.

The sealing device 500 is used to seal an annular gap between a shaft and a housing that rotate relative to each other. The sealing device 500 includes a reinforcing ring 510 and a sealing device body 520 made of a rubber-like elastic body integrally formed with the reinforcing ring 510. The sealing device body 520 has a seal lip 521 that is configured to slide on an outer peripheral surface of the shaft. A garter spring 530 is mounted in an annular groove 521a provided on an outer peripheral surface of the seal lip 521. Thus, the seal lip 521 is pressed radially inward. Therefore, the contact between an inner peripheral tip of the seal lip 521 and the shaft can be maintained.

The sealing device 500 configured as described above is assembled onto the shaft after being transported in a state where the garter spring 530 is mounted. If a region where the garter spring 530 is supported by the annular groove 521a (a range where the garter spring 530 is supported by the annular groove 521a when viewed in the cross section obtained by cutting the seal lip 521 along a plane that includes the central axis of the shaft) is small, the garter spring 530 is likely to disengage from the annular groove 521a. Therefore, during the transportation of the sealing device 500 or assembly thereof onto the shaft, the garter spring 530 may disengage from the annular groove 521a.

By increasing the above region (range), the garter spring 530 may be prevented from easily disengaging from the annular groove 521a, but there is a limitation due to manufacturing process. This point will be described with reference to Fig. 6B.

In this figure, the sealing device body 520 molded through insert molding using the reinforcing ring 510 as an insert component is shown in a cross-sectional view. This figure shows a part of a mold 600 among a plurality of molds used in insert molding. At the time of releasing a molded product, the mold 600 and the molded product move relative to each other in the X-direction indicated by arrows in the figure. At this time, a part (a part illustrated by a heavy-line in the figure) of the annular groove 521a becomes an undercut part U, and so-called undercut release is to be performed. This leads to the above-mentioned limitation in the region (range). In the case of acrylic rubber, which has relatively high flexibility, the above-mentioned range can be set large. However, in the case of fluororubber, which hardly expands and contracts and easily cracks, countermeasures are not taken unlike in the case of acrylic rubber. Thus, the garter spring may be disengaged from the annular groove.

### [Citation List]

### [Patent Literature]

[PTL 1]
   Japanese Patent Application Laid-open No. 2017-223258
[PTL 2]
   Japanese Patent Application Laid-open No. 2012-117611
[PTL 3]
   Japanese Patent Application Laid-open No. 2009-103177
[PTL 4]
   Japanese Utility Model Application Laid-open No. H07-42461

### [Summary of Invention]

### [Technical Problem]

The present invention provides a sealing device that can suppress the disengagement of a garter spring from an annular groove.

### [Solution to Problem]

The present invention employs the following solutions to the above problem.

The present invention provides a sealing device for sealing a gap between a shaft and a housing that rotate relative to each other, the sealing device including:
a reinforcing ring;
a sealing device body made of fluororubber integrally formed with the reinforcing ring; and
a garter spring mounted in an annular groove provided on an outer peripheral surface of a seal lip in the sealing device body,
wherein the sealing device further includes a suppression part configured to suppress protrusion of the garter spring out of the annular groove in a case where the garter spring is deformed when the sealing device is attached to the shaft, the suppression part having:
   a plurality of protrusion parts provided at intervals in a circumferential direction in an outer peripheral surface of the seal lip on a lip leading end side, the protrusion parts protruding toward a root side of the seal lip; and
   a support surface supporting the garter spring along an outer peripheral surface thereof, the support surface being provided in a surface of the protrusion part on the root side when viewed in a cross section obtained by cutting the seal lip along a plane that includes a central axis of the shaft.

According to the present invention, even if the garter spring is about to be disengaged from the annular groove due to its deformation by the shaft, the garter spring is restrained by the protrusion parts that have the support surface to support the garter spring. Since the plurality of protrusion parts are provided at intervals in the circumferential direction, an unnecessary increase in regions that can be undercut parts is suppressed. This prevents the seal lip from being damaged during mold releasing.

Another aspect of the invention provides a sealing device for sealing a gap between a shaft and a housing that rotate relative to each other, the sealing device including:
a reinforcing ring;
a sealing device body made of fluororubber integrally formed with the reinforcing ring; and
a garter spring mounted in an annular groove provided on an outer peripheral surface of a seal lip in the sealing device body,
wherein the sealing device further includes a suppression part configured to suppress protrusion of the garter spring out of the annular groove in a case where the garter spring is deformed when the sealing device is attached to the shaft, the suppression part having a release groove provided on a groove bottom surface of the annular groove.

According to the present invention, undercut parts can be deformed easily during mold releasing, and this can suppress damage to the seal lip. When the seal lip deforms from the inner peripheral surface toward the outer peripheral surface, deforming portions move into the release grooves, thereby suppressing the disengagement of the garter spring from the annular groove.

Another aspect of the invention provides a sealing device for sealing a gap between a shaft and a housing that rotate relative to each other, the sealing device including:
a reinforcing ring;
a sealing device body made of fluororubber integrally formed with the reinforcing ring; and
a garter spring mounted in an annular groove provided on an outer peripheral surface of a seal lip in the sealing device body,
wherein the sealing device further includes a suppression part configured to suppress protrusion of the garter spring out of the annular groove in a case where the garter spring is deformed when the sealing device is attached to the shaft, the suppression part having:
   a release groove provided on a groove bottom surface of the annular groove;
   a plurality of protrusion parts provided at intervals in a circumferential direction in an outer peripheral surface of the seal lip on a lip leading end side, the protrusion part protruding toward a root side of the seal lip; and
   a support surface supporting the garter spring along an outer peripheral surface thereof, the support surface being provided in a surface of the protrusion part on the root side , when viewed in a cross section obtained by cutting the seal lip along a plane that includes a central axis of the shaft.

According to the present invention, even if the garter spring is about to be disengaged from the annular groove due to its deformation by the shaft, the garter spring is restrained by the protrusion parts that have the support surface to support the garter spring. Since the plurality of protrusion parts are provided at intervals in the circumferential direction, an unnecessary increase in regions that can be undercut parts is suppressed. This prevents the seal lip from being damaged during mold releasing. Undercut parts can be deformed easily during mold releasing due to the release grooves, and this can suppress damage to the seal lip. When the seal lip deforms from the inner peripheral surface toward the outer peripheral surface, deforming portions move into the release grooves, thereby suppressing the disengagement of the garter spring from the annular groove.

The garter spring may be supported by the support surfaces of the protrusion parts and the groove bottom surface of the annular groove.

The release groove may be provided at a plurality of locations at intervals in the circumferential direction.

The release groove may be provided at a plurality of locations, and the plurality of protrusion parts and the plurality of release grooves may be provided at different positions in the circumferential direction.

Thus, a function of holding the garter spring by the protrusion parts, as well as a function of making the seal lip deform easily by the release grooves, are effectively exerted.

The protrusion parts and the release grooves may be alternately provided in the circumferential direction.

Note that the above respective configurations may be combined to the greatest extent possible for use.

### [Advantageous Effects of Invention]

According to the present invention, the disengagement of a garter spring from an annular groove can be suppressed as described above.

### [Brief Description of Drawings]

[Fig. 1]

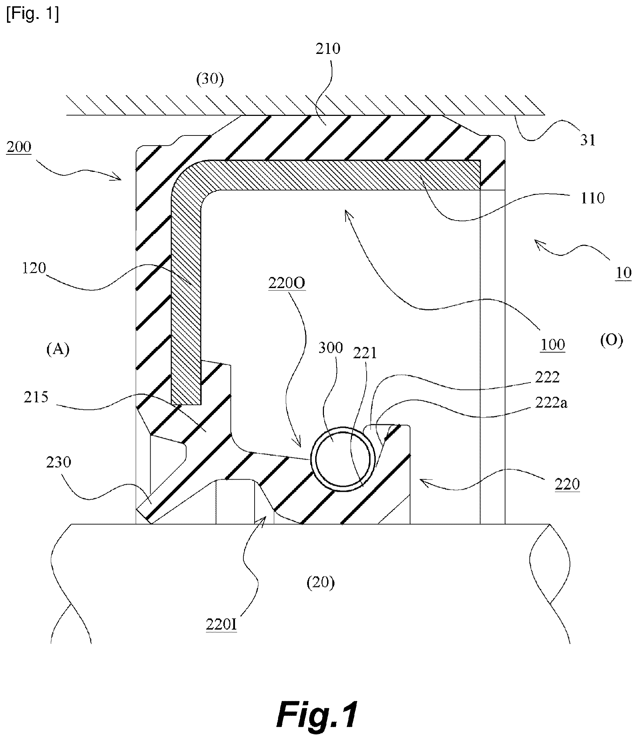

   Fig. 1 is a schematic cross-sectional view of a sealing structure that includes a sealing device according to an embodiment of the present invention.
[Fig. 2]

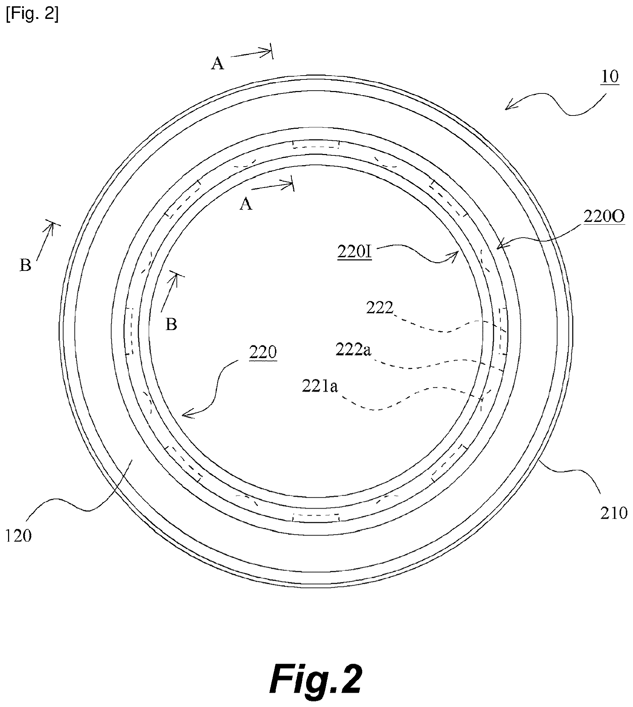

   Fig. 2 is a front view of the sealing device according to the embodiment of the invention.
[Fig. 3]

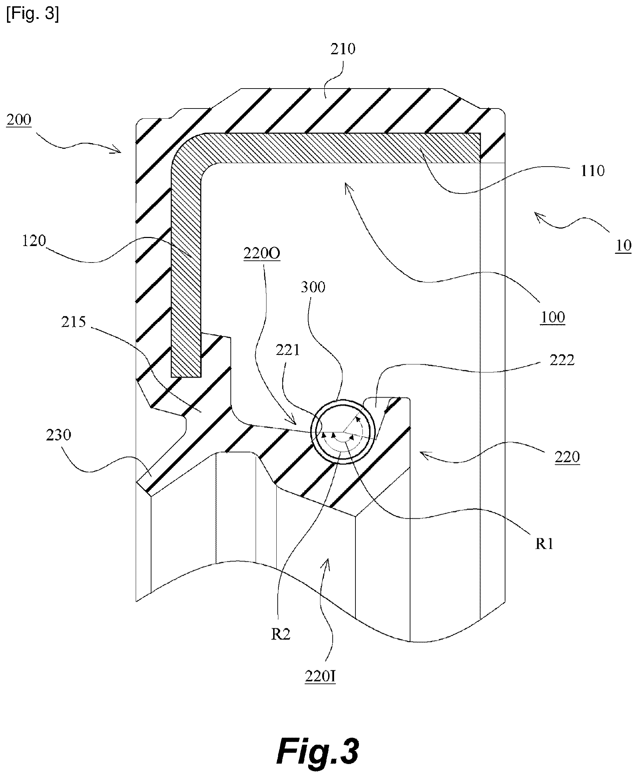

   Fig. 3 is a schematic cross-sectional view of the sealing device according to the embodiment of the invention.
[Fig. 4]

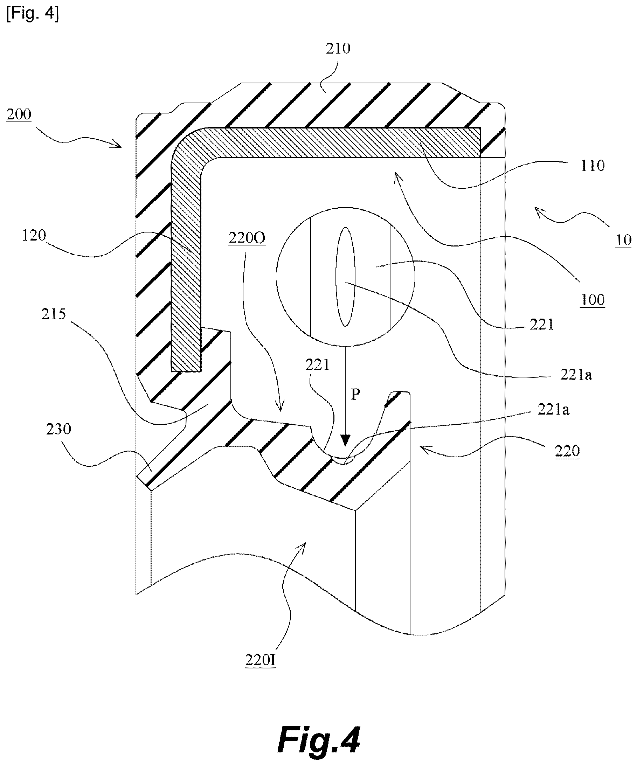

   Fig. 4 is a schematic cross-sectional view of the sealing device according to the embodiment of the invention.
[Fig. 5]

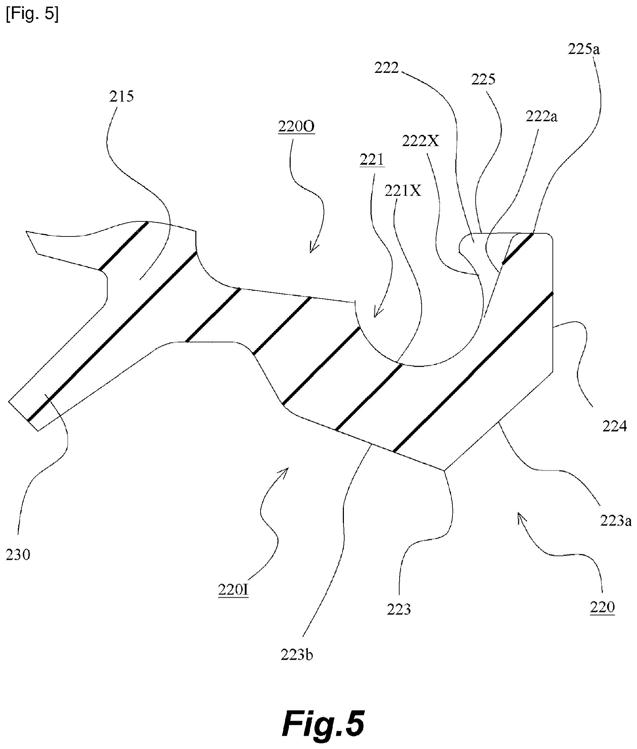

   Fig. 5 is a partially enlarged cross-sectional view of the sealing device according to the embodiment of the present invention.
[Fig. 6]
   Fig. 6 is an explanatory diagram of a sealing device according to the related art.

### [Description of Embodiments]

Hereinafter, a mode for carrying out the invention will be described in detail with reference to the drawings by way of examples on the basis of an embodiment. However, the dimensions, materials, shapes, relative arrangements, and the like of the components described in the embodiment are not intended to limit the scope of the invention to those features unless otherwise specifically stated.

### (Embodiment)

With reference to Figs. 1 to 4, a sealing device according to the embodiment of the present invention will be described. Fig. 1 is a schematic cross-sectional view of a sealing structure that includes the sealing device according to the embodiment of the present invention. Note that Fig. 1 shows the cross-sectional view where the sealing device is cut along a plane that includes a central axis of a shaft 20. Fig. 2 is a front view of the sealing device according to the embodiment of the invention. In Fig. 2, a plurality of protrusion parts 222 and a plurality of release grooves 221a are shown with dotted lines in a see-through manner. The cross-sectional view of the sealing device in Fig. 1 corresponds to the cross-sectional view taken along line A-A in Fig. 2. Fig. 3 is a schematic cross-sectional view of the sealing device according to the embodiment of the invention, showing the cross-sectional view taken along line A-A in Fig. 2. Fig. 4 is a schematic cross-sectional view of the sealing device according to the embodiment of the invention, showing the cross-sectional view taken along line B-B in Fig. 2. Note that in Fig. 4, a garter spring is omitted. Fig. 5 is a partially enlarged cross-sectional view of the sealing device according to the embodiment of the present invention, showing the enlarged cross-sectional view of an area near a seal lip. Note that in Fig. 5, only a cross section is shown, with depth lines omitted.

### <Sealing Structure>

The sealing structure according to this embodiment includes the shaft 20, a housing 30, and a sealing device 10 that seals an annular gap between the shaft 20 and (the axial hole of) the housing 30. The shaft 20 and the housing 30 are configured to rotate relative to each other. The sealing device 10 is a so-called rotary seal and can be used not only in automobile engines as an oil seal but also in reducers for robots and the like. Note that in Fig. 1, the region on the right side of the sealing device 10 is a sealed region O (a region where a fluid to be sealed, such as oil, exists), while the region on the left side of the sealing device 10 is an atmosphere region A.

### <Sealing Device>

The sealing device 10 includes a metallic reinforcing ring 100, a sealing device body 200 made of fluororubber integrally formed with the reinforcing ring 100, and a garter spring 300. Note that by molding the sealing device body 200 through insert molding using the reinforcing ring 100 as an insert component, the reinforcing ring 100 and the sealing device body 200 are integrally formed. The reinforcing ring 100 includes a cylindrical part 110 and an inward flange part 120 that is provided at the end of the cylindrical part 110. The sealing device body 200 includes an outer peripheral seal part 210 that is in close contact with an inner peripheral surface 31 of the axial hole of the housing 30. The sealing device body 200 includes a seal lip 220 and a dust lip 230 that extend radially inward from a waist part 215 near an inner peripheral end of the inward flange part 120 and are configured to slide on an outer peripheral surface of the shaft 20. The seal lip 220 is configured to extend from the waist part 215 radially inward and toward the sealed region O side and slide on the outer peripheral surface of the shaft 20. The seal lip 220 primarily functions to suppress leakage of the fluid to be sealed. The dust lip 230 is configured to extend from the waist part 215 radially inward and toward the atmosphere region A side and slide on the outer peripheral surface of the shaft 20. The dust lip 230 primarily functions to suppress intrusion of foreign mater such as dust in the air into the sealed region O.

The seal lip 220 has an annular groove 221 provided on its outer peripheral surface. The garter spring 300 is mounted in the annular groove 221. In the sealing device 10 according to this embodiment, a suppression part is provided to suppress protrusion of the garter spring 300 out of the annular groove 221 in case where the garter spring is deformed when the sealing device 10 is attached to the shaft 20. The suppression part according to this embodiment has protrusion parts 222 and release grooves 221a, which will be described below.

The plurality of protrusion parts 222 are provided in an outer peripheral surface of the seal lip 220 at intervals in the circumferential direction on a lip leading end side (the right side in Figs. 1 and 3) with respect to the annular groove 221 in an axial direction. The plurality of protrusion parts 222 are configured to protrude toward a root side of the seal lip 220 (an opposite side to the lip leading end side in the axial direction, the left side in Figs. 1 and 3).

A support surface 222X to support the garter spring 300 along an outer peripheral surface thereof is provided in a surface of the protrusion parts 222 on the root side of the seal lip 220 (see Fig. 5). When viewed in the cross section obtained by cutting the seal lip 220 along a plane that includes the central axis of the shaft 20, a range R1 where the garter spring 300 is supported by a groove bottom surface 221X of the annular groove 221 is 180° or less in a portion of the seal lip 220 in which the protrusion part 222 is not provided (see Fig. 3). On the other hand, when viewed in this cross section, in a portion in which the protrusion part 222 is provided, a range R2 where the garter spring 300 is supported by the groove bottom surface 221X of the annular groove 221 and the support surface 222X of the protrusion part 222 is greater than 180°. The total of the ranges where the plurality of protrusion parts 222 are provided may be 30% or more of the entire circumference in the circumferential direction.

The groove bottom surface 221X of the annular groove 221 on the outer peripheral surface of the seal lip 220 has the plurality of release grooves 221a provided at intervals in the circumferential direction. The protrusion parts 222 and the release grooves 221a are provided at different positions in the circumferential direction (see Fig. 2). This embodiment employs the configuration where the protrusion parts 222 and the release grooves 221a are alternately arranged in the circumferential direction. Note that the protrusion parts 222 and the release grooves 221a are not necessarily alternately arranged, but they are preferably alternately arranged to sufficiently exhibit their functions.

In this embodiment, when viewed in the cross section obtained by cutting the seal lip 220 along the plane that includes the central axis of the shaft 20, both the groove bottom surface 221X of the annular groove 221 and the release grooves 221a are arc-shaped, and the curvature radius of the former is larger than that of the latter. Thus, the contact between inner wall surfaces of the release grooves 221a and the garter spring 300 is avoided, except when the seal lip 220 is significantly deformed. In other words, even when the garter spring 300 is mounted, an inside of the release grooves 221a remains empty or is filled with the fluid to be sealed.

In this embodiment, the release grooves 221a are arc-shaped when viewed in the cross section obtained by cutting the seal lip 220 along the plane that includes the central axis of the shaft 20 as described above. However, the shape of the release grooves 221a is not limited to an arc and may be various shapes, such as an elliptical arc or a rectangle, when viewed in the cross section obtained by cutting the seal lip 220 along the plane that includes the central axis of the shaft 20. In this embodiment, when the release grooves 221a is viewed inward from the radially outside (in the direction indicated by an arrow P in Fig. 4), an outer shape of the release grooves 221a is an ellipse (see the portion surrounded by a circle in Fig. 4). However, the outer shape is not limited to an ellipse and may be other shapes such as a circle, a rectangle, as well as an oval other than an ellipse.

### <Advantages of Sealing Device According to This Embodiment>

According to the sealing device 10 of this embodiment, even if the garter spring 300 is about to be disengaged from the annular groove 221 due to deformation of the garter spring 300 by the shaft 20, the garter spring 300 is restrained by the protrusion parts 222 that have the support surface 222X to support the garter spring 300. Thus, even when the sealing device 10 is being attached to the shaft 20 or when the sealing device 10 is subjected to vibration or shock, the disengagement of the garter spring 300 from the annular groove 221 can be suppressed.

Furthermore, since the plurality of protrusion parts 222 are provided at intervals in the circumferential direction, an unnecessary increase in regions that can be undercut parts is suppressed in insert molding. Accordingly, damage to the seal lip 220 during mold releasing can be suppressed. Note that regions to be undercut parts in insert molding are described above in the related art with reference to Fig. 6B.

Furthermore, since the range R1 where the garter spring 300 is supported by the annular groove 221 is 180° or less in the portion without the protrusion parts 222 when viewed in the cross section obtained by cutting the seal lip 220 along the plane that includes the central axis of the shaft 20 in this embodiment, an increase in regions that can be undercut parts is more effectively suppressed.

Moreover, since the plurality of release grooves 221a are provided at intervals in the circumferential direction on the groove bottom surface of the annular groove 221 in this embodiment, undercut parts can be deformed easily during mold releasing, and this can suppress damage to the seal lip 220. Furthermore, when the seal lip 220 deforms from the inner peripheral surface toward the outer peripheral surface, the deforming portions move into the release grooves 221a, thereby suppressing the garter spring 300 from being moved radially outward. This prevents the disengagement of the garter spring 300 from the annular groove 221.

Furthermore, the above protrusion parts 222 and the release grooves 221a are provided at positions that are offset from each other in the circumferential direction. Thus, the function of holding the garter spring 300 by the protrusion parts 222, as well as the function of making the seal lip 220 deform easily by the release grooves 221a, are effectively exerted.

### <Details of Seal Lip>

The detailed configuration of the seal lip 220 will be described with reference to Fig. 5. In the sealing structure, the sealed region O is arranged in a direction parallel to the shaft 20 among the directions from the dust lip 230 to the seal lip 220. The seal lip 220 includes a lip outer peripheral surface 220O on the radially outer side (on the side near the cylindrical part 110 of the reinforcing ring 100) and a lip inner peripheral surface 220l on the radially inner side (on the side opposite to the cylindrical part 110).

The tip of the seal lip 220 on the sealed region O side has a lip leading end surface 224 that is planar and connects the lip outer peripheral surface 220O and the lip inner peripheral surface 2201. It can be said that the lip outer peripheral surface 220O is a surface that continues from the waist part 215 to the lip leading end surface 224 on the radially outer side. Similarly, it can be said that the lip inner peripheral surface 220l is a surface that continues from the waist part 215 to the lip leading end surface 224 on the radially inner side.

The above-described annular groove 221 is provided on the lip outer peripheral surface 220O of the seal lip 220. The above-described protrusion parts 222 are intermittently provided in the direction along the circumferential direction of the shaft 20. It can be said that the portions where the protrusion parts 222 are not intermittently provided are notch parts 222a. It can be said that the protrusion parts 222 include a protrusion part outer peripheral surface 225 on the radially outer side, and the notch parts 222a include a notch part outer peripheral surface 225a on the radially outer side.

In this embodiment, the end surfaces of the protrusion parts 222 on the sealed region O side are provided on the same plane as the end surfaces of the notch parts 222a on the sealed region O side. The end surfaces of the protrusion parts 222 and the end surfaces of the notch parts 222a thus form the lip leading end surface 224. However, the end surfaces of the protrusion parts 222 and the end surfaces of the notch parts 222a may not be provided on the same plane.

The surfaces of the protrusion parts 222 on the side opposite to the sealed region O side are the above-described support surfaces 222X. Note that the surfaces of the notch parts 222a on the side opposite to the sealed region O side do not contact the garter spring 300.

In this embodiment, the groove bottom surface 221X of the annular groove 221 and the support surfaces 222X are configured to have approximately the same curvature radius when viewed in the cross section obtained by cutting the seal lip 220 along the plane that includes the central axis of the shaft 20. However, the curvature radius of the latter may be configured to be smaller than that of the former.

The lip inner peripheral surface 2201 includes a first inclined surface 223a that widens in diameter from the atmosphere region A side toward the sealed region O side, and a second inclined surface 223b that widens in diameter from the sealed region O side toward the atmosphere region A side. An inner peripheral side lip tip 223 is provided at the portion where the first inclined surface 223a and the second inclined surface 223b intersect with each other. The sealing function is exerted by the portion near the inner peripheral side lip tip 223 being slidably in contact with the shaft 20 over the entire circumference.

### (Other)

The above-described embodiment shows a configuration where the plurality of release grooves 221a are provided at intervals in the circumferential direction on the groove bottom surface of the annular groove 221. However, the release grooves 221a may not be provided in a case where damage to the seal lip 220 or the disengagement of the garter spring 300 from the annular groove 221 during mold releasing do not cause problems due to the dimensions of each part, the properties of materials, and the like.

Furthermore, the protrusion parts 222 may not be provided in a case where the release grooves 221a solely can prevent damage to the seal lip 220 or the disengagement of the garter spring 300 from the annular groove 221 during mold releasing from causing problems.

Although the above described embodiment shows a configuration where the sealing device body 200 has the outer peripheral seal part 210, the present invention is also applicable to sealing devices that do not include an outer peripheral seal part and are configured such that the cylindrical part of a reinforcing ring is directly fitted into the inner peripheral surface of the shaft hole of a housing. Furthermore, the present invention is applicable to sealing devices that do not include a dust lip. Moreover, the present invention is applicable to sealing devices that include a side lip that slides on an outward flange part or the like provided on a shaft. As described above, the present invention is applicable to various sealing devices, provided that the sealing device body includes a seal lip.

### [Reference Signs List]

- 10: Sealing device
- 100: Reinforcing ring
- 110: Cylindrical part
- 120: Inward flange part
- 200: Sealing device body
- 210: Outer peripheral seal part
- 215: Waist part
- 220: Seal lip
- 2201: Lip inner peripheral surface
- 220O: Lip outer peripheral surface
- 221: Annular groove
- 221a: Release groove
- 222: Protrusion part
- 222X: Support surface
- 222a: Notch part
- 223: Inner peripheral side lip tip
- 223a: First inclined surface
- 223b: Second inclined surface
- 224: Lip leading end surface
- 225: Protrusion part outer peripheral surface
- 225a: Notch part outer peripheral surface
- 230: Dust lip
- 300: Garter spring
- 20: Shaft
- 30: Housing
- 31: Inner peripheral surface
- A: Atmosphere region
- O: Sealed region

## Claims

1. A sealing device for sealing a gap between a shaft and a housing that rotate relative to each other, the sealing device comprising:
a reinforcing ring;
a sealing device body made of fluororubber integrally formed with the reinforcing ring; and
a garter spring mounted in an annular groove provided on an outer peripheral surface of a seal lip in the sealing device body,
wherein the sealing device further comprises a suppression part configured to suppress protrusion of the garter spring out of the annular groove in a case where the garter spring is deformed when the sealing device is attached to the shaft, the suppression part having:
a plurality of protrusion parts provided at intervals in a circumferential direction in an outer peripheral surface of the seal lip on a lip leading end side, the protrusion parts protruding toward a root side of the seal lip; and
a support surface supporting the garter spring along an outer peripheral surface thereof, the support surface being provided in a surface of the protrusion part on the root side when viewed in a cross section obtained by cutting the seal lip along a plane that includes a central axis of the shaft.

2. A sealing device for sealing a gap between a shaft and a housing that rotate relative to each other, the sealing device comprising:
a reinforcing ring;
a sealing device body made of fluororubber integrally formed with the reinforcing ring; and
a garter spring mounted in an annular groove provided on an outer peripheral surface of a seal lip in the sealing device body,
wherein the sealing device further comprises a suppression part configured to suppress protrusion of the garter spring out of the annular groove in a case where the garter spring is deformed when the sealing device is attached to the shaft, the suppression part having a release groove provided on a groove bottom surface of the annular groove.

3. A sealing device for sealing a gap between a shaft and a housing that rotate relative to each other, the sealing device comprising:
a reinforcing ring;
a sealing device body made of fluororubber integrally formed with the reinforcing ring; and
a garter spring mounted in an annular groove provided on an outer peripheral surface of a seal lip in the sealing device body,
wherein the sealing device further comprises a suppression part configured to suppress protrusion of the garter spring out of the annular groove in a case where the garter spring is deformed when the sealing device is attached to the shaft, the suppression part having:
a release groove provided on a groove bottom surface of the annular groove;
a plurality of protrusion parts provided at intervals in a circumferential direction in an outer peripheral surface of the seal lip on a lip leading end side, the protrusion parts protruding toward a root side of the seal lip; and
a support surface supporting the garter spring along an outer peripheral surface thereof, the support surface being provided in a surface of the protrusion part on the root side when viewed in a cross section obtained by cutting the seal lip along a plane that includes a central axis of the shaft.

4. The sealing device according to claim 1 or 3, wherein the garter spring is supported by the support surfaces of the protrusion parts and the groove bottom surface of the annular groove.

5. The sealing device according to claim 2 or 3, wherein the release groove is provided at a plurality of locations at intervals in the circumferential direction.

6. The sealing device according to claim 3, wherein the release groove is provided at a plurality of locations, and the plurality of protrusion parts and the plurality of release grooves are provided at different positions in the circumferential direction.

7. The sealing device according to claim 6, wherein the protrusion parts and the release grooves are alternately provided in the circumferential direction.
